# EUROPÄISCHE PATENTSCHRIFT

(11) **EP 2 832 208 B1**
(45) Veröffentlichungstag und Bekanntmachung des Hinweises auf die Patenterteilung: **01.03.2017**
(21) Anmeldenummer: 14179365.3
(22) Anmeldetag: 31.07.2014
(51) Int. Cl.: A01C 15/00

(54) **Zentriereinrichtung zur Regulierung des vertikalen Durchflusses von lose rieselfähigem Schüttgut**
Centring device for regulating the vertical flow of loose free-flowing bulk materials
Dispositif de centrage pour réguler l'écoulement vertical de produits en vrac pouvant s'écouler

(30) Priorität: 01.08.2013 DE 102013215181
(43) Veröffentlichungstag der Anmeldung: 04.02.2015
(73) Patentinhaber: Bintec GmbH & Co. KG, 92421 Schwandorf (DE)
(72) Erfinder: Horsch, Marco, 92421 Schwandorf (DE)
(74) Vertreter: Benninger, Johannes

(56) Entgegenhaltungen:
- EP-A1- 0 001 422
- DE-A1- 1 923 963
- DE-A1- 2 352 455
- DE-B- 1 150 023

## Beschreibung

Die vorliegende Erfindung betrifft eine Vorrichtung zur Beeinflussung des Fließ-, Riesel- oder Schüttverhaltens von lose rieselfähigen Schüttgütern, insbesondere von körnigem Gut wie Getreide, dass in vertikaler Richtung zu einem gleichmäßigen Materialfluss zentriert werden soll. Genauer gesagt, betrifft die Erfindung eine Zentriereinrichtung und/oder Drosselanordnung zur Regulierung des vertikalen Durchflusses von lose rieselfähigem Schüttgut, insbesondere von körnigem Gut wie Getreide, Dünger etc.

Die Handhabung der meisten Schüttgüter macht aufgrund des schwer zu berechnenden und zu kontrollierenden Fließ- und Rieselverhaltens die ungestörte und gleichmäßige Materialförderung schwierig. So kann es bspw. bei der Getreidelagerung und Getreideförderung aufgrund schwankenden Materialflusses, hervorgerufen durch z. B. unterschiedliche Mengen je Zeiteinheit, unterschiedliche Getreidefeuchtigkeitsgrade, unterschiedlichem Fremdbesatz und/oder unterschiedlichen Flies-Geschwindigkeiten etc. zu Funktionseinschränkungen bei nachgeschalteten Fördereinrichtungen und/oder Geräten kommen.

Vor allem Siloverteiler, die das Getreide im Silo gleichmäßig verteilen sollen, sind darauf angewiesen, dass der Getreidefluss möglichst zentral auf Wurfscheiben oder Verteilkegel geleitet und diesen zugeführt wird, um das Getreide gleichmäßig und im Idealfall kreisförmig innerhalb des Silos verteilen zu können.

Systeme die z.B. mit einem vorgeschalteten Trichter arbeiten, funktionieren i.d.R. nur dann zufriedenstellend, wenn dafür gesorgt wird, dass der Trichter nicht leer läuft, sondern ständig durch eine Art "Vorrats-Puffer" vollgehalten wird und das Schüttgut leicht zurück gestaut wird. Wenn aber der Trichter nicht voll ist und der Getreidefluss auf die Schräge des Trichters trifft, wird das Getreide abgelenkt, wodurch es dazu neigt, den Trichter dezentral zu verlassen, wodurch die gleichmäßige Verteilung im Silo beeinträchtigt werden kann.

Aus der DE 19 23 963 A1 ist eine Vorrichtung zum Abzug von rieselfähigem Schüttgut aus großen Behältern wie etwa runden Bunkern oder Apparaten mit größeren Durchmessern und vertikaler Achse, d.h. in Form stehender Zylinder bekannt. Am unteren Ende eines Schüttgutraumes befinden sich hierbei mehrere konzentrische Ringspalte, die als Abzugsöffnungen aus dem Schüttgutraum dienen sollen. Die Ringspalte werden mit Hilfe von Verdrängerkörpern mit geneigten Wänden gebildet, wodurch das Schuttgut durch die einzelnen Ringspalte gleichmäßig über deren Umfang gestaut durchströmen und zum Bunkerausgang hin mit Hilfe von Leittrichtern zusammengeführt werden soll.

Da Schüttgut mit schwankenden Materialeigenschaften wie Getreide auch ständig schwankende Fließeigenschaften hat, müsste der sog. "Vorrats-Puffer" relativ groß dimensioniert werden und gleichzeitig die Zuführung geregelt werden, damit weder ein Überfüllungseffekt noch ein Leerlaufen auftritt. Dadurch wird die zentrierte Zuführung jedoch zu einen Platz- und Steuerungsproblem.

Um diese Probleme und Nachteile zu vermeiden, besteht das Ziel der vorliegenden Erfindung darin, eine Maßnahme zur Verfügung zu stellen, die das Fließ-, Riesel- oder Schütterverhaltens von lose rieselfähigen Schüttgütern positiv beeinflussen und verbessern kann. Insbesondere bei körnigem Gut wie Getreide soll der Materialfluss in vertikaler Richtung vergleichmäßigt und zentriert werden.

Zur Erreichung dieses Ziels der Erfindung wird eine Zentriereinrichtung und/oder Drosselanordnung zur Regulierung des vertikalen Durchflusses von lose rieselfähigem Schüttgut, insbesondere von körnigem Gut wie Getreide, Dünger etc. vorgeschlagen. Diese Zentriereinrichtung bzw. Drosselanordnung umfasst einen Vorratstrichter in Form eines ungefähr vertikal angeordneten Rohrabschnittes zur Aufnahme und Durchleitung des mit der Schwerkraft nach unten rieselnden Schüttgutes. Der Rohrabschnitt verjüngt sich nach unten hin trichterförmig und mündet in einer zentralen unteren Auslauföffnung. Außerdem ist ein oberhalb der Auslauföffnung und konzentrisch zu dieser angeordneter Überlaufring vorgesehen, der durch einen vertikal angeordneten Rohrabschnitt gebildet ist, der oben und unten offen ist.

Schließlich umfasst die Zentriereinrichtung und/oder Drosselanordnung eine sich um eine Vertikalachse drehende schräge Scheibe bzw. Rutsche, deren Durchmesser ungefähr mit einem Durchmesser des Überlaufrings übereinstimmt. Bei der sich um die Vertikalachse drehenden schrägen (bspw. 45°) Scheibe bzw. Rutsche als Abdeckung kann der Gutstrom ungefähr mittig, ggf. aber auch außermittig auftreffen und wird dabei in Kreisbewegungen in der Drosselvorrichtung verteilt. Die sich um die Vertikalachse drehende schräge Scheibe bzw. Rutsche ist in ihren Abmessungen so ausgelegt, damit der eintreffende Gutstrom nicht direkt durch den Überlaufring abfließen kann.

Im Falle einer Scheibe als Abdeckung ist diese vorzugsweise schräg angeordnet, bspw. in einem Winkel von ca. 45 Grad zur Horizontalen, so dass der Gutstrom ungefähr senkrecht darauf trifft und zu einer Seite hin abgelenkt wird, was zu einer günstigen Kornverteilung innerhalb der Drosselanordnung führt. Bei der Variante der Abdeckung als Scheibe entsprechen sich die Außendurchmesser der Abdeckung sowie des Überlaufringes vorzugsweise in etwa.

Bei der Zentriereinrichtung und/oder Drosselanordnung ist einerseits der Überlaufring beabstandet zur unteren Auslauföffnung des Rohrabschnittes angeordnet. Zudem ist auch die Abdeckung beabstandet zur oberen Öffnung des Überlaufringes angeordnet.

Bei der erfindungsgemäßen Zentriereinrichtung und/oder Drosselanordnung definieren die Größe und/oder der Durchmesser der unteren Auslauföffnung einen maximalen Durchfluss an Schüttgut. Der zentrale Rohrabschnitt ist als Vorratstrichter mit senkrechten Seitenwänden und der unteren Auslauföffnung ausgebildet, wobei diese mindestens den maximalen Durchfluss an Schüttgut aufnehmen kann. Der innenliegende, senkrecht eingebaute zentrale Überlaufring ist so dimensioniert, dass er innen mindestens den maximalen Durchfluss an Schüttgut aufnehmen kann. Auch muss der Abstand des Überlaufrings zur unteren Auslauföffnung so gewählt sein, dass dieser Öffnungsquerschnitt maximal den Mindest-Durchfluss an Schüttgut aufnehmen kann. Die Abdeckhaube und/oder die sich um die Vertikalachse drehende schräge Scheibe sind mittig über dem Überlaufring in einem Abstand angeordnet, dass mindestens der maximale Durchfluss an Schüttgut über den Überlaufring ablaufen kann. Eine Höhe des Überlaufrings ist so wählen ist, dass das Schüttgut bei dezentraler Füllung des Vorratstrichters gleichmäßig um die Öffnung zwischen Vorratstrichter und Überlaufring den Vorratstrichter anfüllen kann, bevor es über den Überlaufring ablaufen kann.

Die Zentriereinrichtung bzw. Drosselanordnung dient zur Fließbeeinflussung von lose rieselfähigen Schüttgütern, hauptsächlich von Getreide, das senkrecht zu einem gleichmäßigeren Materialfluss zentriert wird. Die Erfindung umfasst folgende wesentlichen Komponenten: Ein Vorratstrichter mit senkrechten Seitenwänden und einer Auslauföffnung ist so dimensioniert, dass er mindestens den maximalen Getreidefluss oder Durchfluss an Schüttgut aufnehmen kann. Ein innenliegend senkrecht eingebauter zentraler Überlaufring kann innen mindestens den maximalen Getreidefluss oder Durchfluss an Schüttgut aufnehmen. Der Abstand zur Auslauföffnung wird so gewählt, dass er maximal den Mindest-Getreidefluss oder Mindest-Durchfluss an Schüttgut aufnehmen kann. Eine Abdeckhaube oder die sich um die Vertikalachse drehende schräge Scheibe ist mittig über dem Überlaufring in einem Abstand angeordnet, so dass mindestens der maximale Getreidefluss oder Durchfluss an Schüttgut über das Überlaufrohr ablaufen kann.

Die Drosselanordnung dient der Regulierung des vertikalen Durchflusses von lose rieselfähigem Schüttgut, insbesondere von körnigem Gut wie Getreide, Dünger etc. und weist einen ungefähr vertikal angeordneten Rohrabschnitt zur Aufnahme und Durchleitung des mit der Schwerkraft nach unten rieselnden Schüttgutes auf, wobei sich der Rohrabschnitt nach unten hin trichterförmig verjüngt und in einer zentralen unteren Auslauföffnung mündet. Oberhalb der Auslauföffnung und konzentrisch zu dieser ist ein Überlaufring angeordnet, der durch einen vertikal angeordneten Rohrabschnitt gebildet ist, der oben und unten offen ist. Es hat sich in Versuchen herausgestellt, dass das körnige Gut wie bspw. das durch die Drosselanordnung nach unten fallende Getreide nicht immer gleichmäßig bzw. mittig auf die dachförmige Abdeckhaube trifft, wodurch es zu einem nicht optimal zentrierten Getreidestrom und damit zu einer stellenweise unerwünschten oder störenden Ungleichmäßigkeit im Getreidestrom kommen kann.

Um diese Unzulänglichkeiten zu vermeiden, sieht die erfindungsgemäße Zentriereinrichtung bzw. Drosselanordnung eine oberhalb des Überlaufrings angeordnete Abdeckung vor, die den schwerkraftbedingten Strom des rieselnden Schüttgutes zumindest teilweise vom Durchlass des Überlaufringes ablenkt und in Richtung zu den sich trichterförmig verjüngenden Wänden des Rohrabschnittes hinlenkt. Dies wird insbesondere dadurch erreicht, dass die Abdeckung scheibenförmig ausgebildet ist. Zudem kann es von Vorteil sein, wenn die scheibenförmige Abdeckung schräg oberhalb des Überlaufrings angeordnet und/oder um eine quer zur Längserstreckungsrichtung des vertikalen Rohrabschnittes angeordnete horizontale Achse verschwenkbar ist. Durch einen einstellbaren Neigungswinkel der oberhalb des Überlaufringes angeordneten Abdeckscheibe kann der Durchfluss des körnigen Gutes vergleichmäßigt und damit optimiert werden, der durch den Überlaufring und außen daran vorbei strömt.

Da in manchen Applikationen, wie z. B. bei einer Verteilung eines Gutstroms auf einer großen Fläche bereits geringste Abweichungen in der Gutverteilung und/oder des Strömungsverhaltens zu großen Auswirkungen führen können, kann als besonders vorteilhafte alternative Variante eine drehbare Scheibe als Ablenkmittel oberhalb des Überlaufrings eingesetzt werden. Hierbei wird eine sich um eine Vertikalachse drehende schräge Scheibe eingesetzt, um die Zentriergenauigkeit nochmals stark zu verbessern. Hierbei wird bei zentraler oder auch bei dezentraler Befüllung der Zentrieranordnung der Gutstrom kreisförmig im Rohrabschnitt als Vorratstrichter um den Überlaufring herum eingebracht. Dadurch läuft auch der der Gutstrom kreisförmig über den Überlaufring ab, wodurch der sonst statische Überlauf nun kreisförmig drehend zur Mitte hin überläuft. Diese Drehbewegung kann durch eine Drehung der schrägen Scheibe um ihre vertikale Drehachse, wahlweise oder zusätzlich auch durch eine Drehung der gesamten Zentriereinrichtung um eine zentrale Vertikalachse erreicht werden.

Im Falle der Drehung der gesamten Zentriereinrichtung besteht auch die Möglichkeit, die schräge Scheibe mittels eines Getriebeantriebs in gleicher Richtung schneller oder auch mit entgegengesetzt zur Drehung der Zentriereinrichtung rotieren zu lassen.

Zur weiteren Optimierung ist es auch möglich, die sich drehende schräge Scheibe mit einer drehenden Gutrutsche oder auch mit einem drehenden Einlauftrichter mit dezentralem Auslauf zu kombinieren, wobei bei der Dimensionierung immer darauf geachtet werden muss, dass der einlaufende Gutstrom nicht direkt in den Bereich innerhalb des Überlaufringes gelangt, da dies für eine exakte Gutstromdosierung hinderlich wäre. Somit sieht eine vorteilhafte weitere Variante der Zentriereinrichtung und/oder Drosselanordnung vor, dass der gesamte äußere Rohrabschnitt mitsamt den innerhalb davon angeordneten weiteren Bestandteilen um seine vertikale Längsachse rotierbar gestaltet ist. Wahlweise kann auch nur die geneigte Abdeckscheibe bei feststehendem äußerem Rohrabschnitt um eine vertikale Achse rotierbar sein. Darüber hinaus ist es auch möglich, sowohl die oberhalb des Überlaufrings geneigt und/oder schwenkbar angeordnete scheibenförmige Abdeckung als auch den Rohrabschnitt jeweils gegensinnig zueinander um eine vertikale Drehachse rotierbar zu machen.

Die erfindungsgemäße Zentriereinrichtung bzw. Drosselanordnung lässt sich je nach Ausführungsvariante der drehbaren Leitscheibe oberhalb des Überlaufringes durch Austausch der Abdeckhaube als eine sich drehende Getreiderutsche oder Gutrutsche für körniges Gut charakterisieren. Dabei bleiben die Effekte der Vorrichtung unterhalb der Abdeckhaube bzw. Getreide- oder Gutrutsche weitgehend unverändert erhalten. Durch das Drehen der Getreide-/ Gutrutsche wird der Überlaufring rings herum zum Überlaufen gebracht und das zur Mitte hin überlaufende Getreide oder Gut noch optimierter zentriert.

Je nach Ausführungsvariante kann die Drehung der Getreiderutsche wie folgt gestaltet werden. So ist eine Drehung mittels separaten Antriebs möglich. Wahlweise kann der Antrieb bspw. durch den Gutfluss oder durch den Getreidefluss oder auch motorgetrieben erfolgen, wobei die Drossel- bzw. Zentriereinrichtung feststehend ausgebildet sein kann. Ebenso möglich ist eine starre Verbindung der Getreiderutsche mit der Drossel-, bzw. Zentriereinrichtung, so dass eine Drehbewegung um eine vertikale Längsachse der Drosselanordnung durch Drehung der gesamten Apparatur erfolgen kann. Möglich ist zudem eine Drehung der Getreiderutsche gegenläufig zur Drehung der Drossel- bzw. Zentriereinrichtung, bspw. mit Hilfe eines Umkehrgetriebes oder mittels separaten, motorgetriebenen Antriebes.

Schließlich sollte an dieser Stelle erwähnt werden, dass die Anordnung in ihren Abmessungen über weite Bereiche variieren kann. Die sinnvollen Dimensionen können insbesondere abhängen von der gewünschten Durchflussleistung sowie auch von den Eigenschaften des Schüttgutes, d.h. von dessen Korngröße wie auch von dessen Rieselfähigkeit.

Eine statisch einseitige Befüllung der Dosier-, Zentrier- und/oder Drosseleinrichtung kann durch diese beschriebenen Varianten mit der rotierenden Scheibe und/oder der rotierenden Dosier- und/oder Drossel- bzw. Zentriereinrichtung auf effektive Weise ausgeglichen werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer aus dem Stand der Technik bekannten Ausführungsvariante einer Zentriereinrichtung und/oder Drosselanordnung mit ihren wesentlichen Komponenten.
Fig. 2 zeigt in einer schematischen Darstellung den Gutfluss von Schüttgut durch die in Fig. 1 gezeigte Variante der Zentriereinrichtung bzw. Drosselanordnung.
Fig. 3 zeigt eine perspektivische Ansicht der ersten Ausführungsvariante der aus dem Stand der Technik bekannten Zentriereinrichtung.
Fig. 4 zeigt eine schematische Darstellung einer Ausführungsvariante der erfindungsgemäßen Zentriereinrichtung.
Fig. 5 zeigt in einer schematischen Darstellung den Gutfluss von Schüttgut durch die in Fig. 4 gezeigte Variante der erfindungsgemäßen Zentriereinrichtung bzw. Drosselanordnung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Zentriereinrichtung und/oder Drosselanordnung ausgestaltet sein kann und stellen keine abschließende Begrenzung dar.

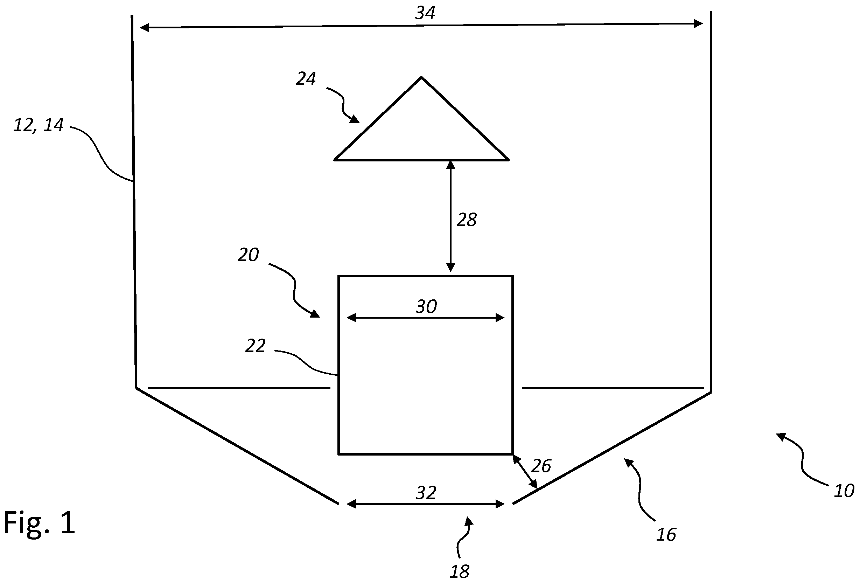

Die schematische Schnittansicht der Fig. 1 verdeutlicht eine mögliche Ausführungsvariante einer aus dem Stand der Technik bekannten Zentriereinrichtung und/oder Drosselanordnung 10, die der Regulierung des vertikalen Durchflusses von losem und gut rieselfähigem Schüttgut dient und die sich insbesondere für körniges Gut wie Getreide, Düngergranulat etc. eignet. Die in den Figuren 1 bis 3 gezeigte Zentriereinrichtung bzw. Drosselanordnung 10 wird im weiteren Zusammenhang als erste Ausführungsvariante der Zentriereinrichtung bzw. Drosselanordnung 10 bezeichnet, die jedoch lediglich einen Stand der Technik zeigt, der das Verständnis der Erfindung erleichtern soll.

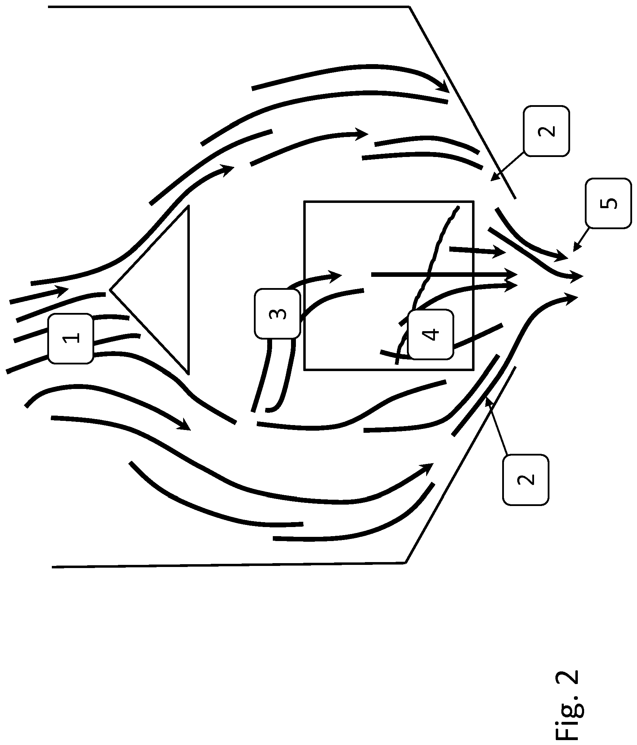

Die Zentriereinrichtung 10 bzw. Drosselanordnung umfasst einen Vorratstrichter 12 in Form eines ungefähr vertikal angeordneten Rohrabschnittes 14 zur Aufnahme und Durchleitung des mit der Schwerkraft nach unten rieselnden Schüttgutes (vgl. Fig. 2). Der Rohrabschnitt 14 verjüngt sich nach unten hin trichterförmig, d.h. in einem ist ein oberhalb der Auslauföffnung 18 und konzentrisch zu dieser angeordneter Überlaufring 20 vorgesehen, der durch einen vertikal angeordneten Rohrabschnitt 22 gebildet ist, der oben und unten offen ist. Schließlich umfasst die Drosselanordnung 10 eine oberhalb des Überlaufrings 20 angeordnete Abdeckung oder Abdeckhaube 24, deren Durchmesser ungefähr dem Außendurchmesser des Überlaufrings 20 entspricht.

Der Überlaufring 20 ist beabstandet zur unteren Auslauföffnung 18 des Rohrabschnittes 14 der Zentriereinrichtung und/oder Drosselanordnung 10 angeordnet. Dieser Abstand 26 ist zweckmäßigerweise so bemessen, dass der resultierende freie Querschnitt zwischen der Unterkante des Rohrabschnittes 22 und dem Trichterabschnitt 16 einen ausreichenden Gutfluss erlaubt. Der Abstand 26 und damit der resultierende freie Querschnitt definiert den maximalen Durchfluss an Schüttgut, der durch die erfindungsgemäße Zentriereinrichtung 10 nach unten durch die Auslauföffnung 18 abgegeben werden kann. Im gezeigten Ausführungsbeispiel kann der Abstand 24 zwischen dem Überlaufring 20 und dem Trichterabschnitt 16 etwas wenig als einem Drittel des Durchmessers des Überlaufringes 20 entsprechen.

Außerdem ist auch die Abdeckung 24 beabstandet zur oberen Öffnung des Überlaufringes 20 angeordnet. Wie in Fig. 1 zu erkennen ist, kann die Abdeckung 24 insbesondere dachförmig ausgebildet sein. Der Abstand 28 zwischen dem oberen ringförmigen Rand des Rohrabschnittes 22 und der Unterkante der Abdeckung 24 kann so gewählt sein, dass eine definierte Menge an Schüttgut über den Überlaufring 20 bzw. das Überlaufrohr ablaufen kann. Im gezeigten Ausführungsbeispiel kann der Abstand 28 zwischen der Abdeckung 24 und dem Überlaufring 20 ungefähr dessen Durchmesser entsprechen.

Der Innendurchmesser 30 des Überlaufringes 20 definiert zusammen mit dessen Höhe, welches Maximalvolumen je Zeiteinheit der Überlaufring 20 aufnehmen kann. In erster Linie jedoch definiert der Durchmesser 32 der unteren Auslauföffnung 18 den maximalen Durchfluss an Schüttgut, der pro Zeiteinheit die Zentriereinrichtung bzw. Drosselanordnung 10 nach unten verlassen, d.h., der die Zentriereinrichtung bzw. Drosselanordnung 10 passieren kann. Darüber hinaus definiert der Innendurchmesser 34 des Rohrabschnittes 14 das gesamte Aufnahmevolumen der Zentriereinrichtung bzw. Drosselanordnung 10. Im gezeigten Ausführungsbeispiel beträgt der Innendurchmesser 34 des Rohrabschnittes 14 in etwa dem dreifachen Wert des Innendurchmessers 30 des Überlaufrings 20, dessen Höhe in etwa gleich seinem Innendurchmesser 30 oder etwas größer ist. Der Abstand 28 zur Abdeckung 24 ist dagegen etwas geringer als sein Innendurchmesser 30, während der Abstand 26 deutlich geringer ist als der Abstand 28.

Die Funktionsweise der ersten Variante der Zentriereinrichtung 10 bzw. Drosselanordnung lässt sich anhand der Fig. 2 nachvollzielen. Das Getreide oder Schüttgut tritt in die Zentriereinrichtung 10 bzw. in die Drosselanordnung ein und trifft ca. mittig auf die Abdeckhaube 24 und wird in den Vorratstrichter umgeleitet (1). Da der Abstand zwischen Überlaufring und Trichterauslauf nur den Mindest-Getreidefluss oder Mindest-Durchfluss an Schüttgut aufnehmen kann, staut sich das Getreide im Vorratstrichter auf und fließt gleichmäßig zwischen dem Vorratstrichter und dem Überlaufring unten aus dem Vorratstrichter aus (2). Die restliche Getreidemenge bzw. restliche Menge an Schüttgut, die sich weiter im Vorratstrichter aufstaut, läuft dann über den Überlaufring nach innen, zu Mitte hin ab (3). Die Höhe des Überlaufrings muss so gewählt sein, damit das Getreide oder Schüttgut bei dezentraler Füllung des Vorratstrichters gleichmäßig um die Öffnung zwischen Vorratstrichter und Überlaufring anfüllen kann, bevor es über den Überlaufring ablaufen kann (4). Am Vorratstrichterauslauf kommen somit die beiden Getreideströme oder Schüttgutströme zentral und in gleichmäßiger, gebremster Fließgeschwindigkeit heraus (5).

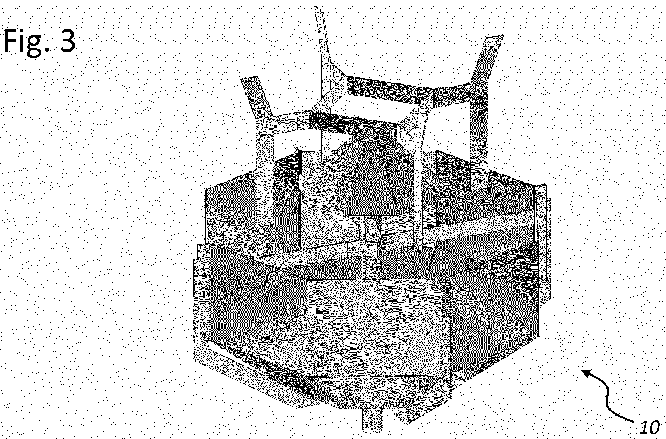

Die perspektivische Ansicht der Fig. 3 lässt erkennen, wie die Zentriereinrichtung 10 bzw. Drosselanordnung konkret aussehen kann, wenn sie bspw. aus einer Vielzahl von ebenen, an ihren Stoßstellen winkelig abgekanteten Blechabschnitten gebildet ist, die durch Vernieten oder Verschrauben aneinander gefügt sein können. Dort ist erkennbar, dass die Abdeckung 24 wahlweise eine zentrale obere Öffnung aufweisen kann. Zudem kann der Überlaufring ggf. einen deutlich kleineren Durchmesser aufweisen als dies in den Figuren 1 und 2 angedeutet wurde.

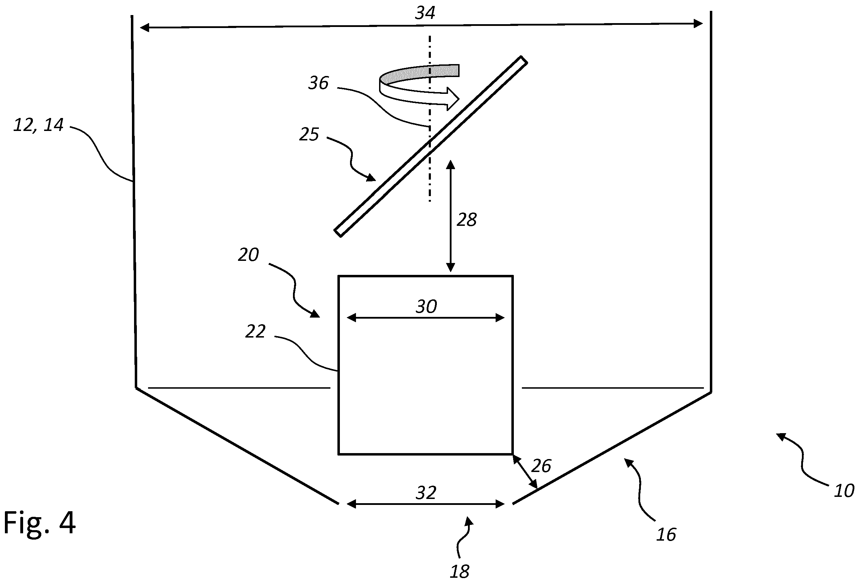

Die schematische Schnittansicht der Fig. 4 zeigt eine Ausführungsvariante der erfindungsgemäßen Zentriereinrichtung bzw. Drosselanordnung 10, die wiederum der Regulierung des vertikalen Durchflusses von losem und gut rieselfähigem Schüttgut dient. Die Zentriereinrichtung bzw. Drosselanordnung 10 entspricht im Aufbau und ihren Komponenten weitgehend der ersten Variante (vgl. Fig. 1) und umfasst den Vorratstrichter 12 mit dem vertikal angeordneten Rohrabschnitt 14, der sich nach unten hin trichterförmig verjüngt. Oberhalb der Auslauföffnung 18 und konzentrisch zu dieser befindet sich der Überlaufring 20, mit seinem offenen Rohrabschnitt 22. Die oberhalb des Überlaufrings 20 angeordnete Abdeckung ist bei der zweiten Variante der Drosselanordnung 10 durch eine Abdeckscheibe 25 gebildet, die gegenüber der vertikalen Längsachse 36 schräg gestellt ist, bspw. um einen Winkel von ca. 45 Grad, wie dies die Fig. 4 erkennen lässt. Wahlweise kann durch einen einstellbaren Neigungswinkel der oberhalb des Überlaufringes 20 angeordneten Abdeckscheibe 25 der Durchfluss des körnigen Gutes vergleichmäßigt und damit optimiert werden, der durch den Überlaufring 20 und an diesem außen vorbei strömt und durch die Auslauföffnung 18 nach unten austritt.

Die Abdeckscheibe 25 kann insbesondere eine ovale bzw. ellipsenförmige Außenkontur aufweisen, so dass sie in einer Projektion von oben den Überlaufring 20 weitgehend abdeckt, auch wenn sie in der gezeigten Weise schräg gestellt ist.

Die Abdeckscheibe 25 ist beabstandet zur oberen Öffnung des Überlaufringes 20 angeordnet. Wie in Fig. 4 zu erkennen, kann ein mittlerer Abstand 28 zwischen dem oberen ringförmigen Rand des Rohrabschnittes 22 und der Abdeckscheibe 25 so gewählt sein, dass eine definierte Menge an Schüttgut über den Überlaufring 20 bzw. das Überlaufrohr ablaufen kann. Im gezeigten Ausführungsbeispiel kann der Abstand 28 zwischen einem mittleren Bereich der Abdeckung 25 und dem Überlaufring 20 ungefähr dessen Durchmesser entsprechen.

Der übrige Aufbau der Zentriereinrichtung bzw. Drosselanordnung, die Dimensionen und Funktionsweise kann weitgehend der bereits anhand der Fig. 1 beschriebenen ersten Variante entsprechen, so dass auf eine Beschreibung der weiteren Details auf diese Beschreibung verwiesen werden kann.

Die Fig. 4 lässt zudem eine weitere Besonderheit der erfindungsgemäßen Zentriereinrichtung bzw. Drosselanordnung 10 erkennen, die in einer Rotierbarkeit um die Längsmittelachse 36 besteht. So kann wahlweise der gesamte äußere Rohrabschnitt 14 mitsamt den innerhalb davon angeordneten weiteren Bestandteilen 20 und 25 um seine vertikale Längsachse 36 rotierbar sein. Wahlweise kann auch nur die geneigte Abdeckscheibe 25 bei feststehendem äußerem Rohrabschnitt 14 um die vertikale Achse 36 rotierbar sein. Darüber hinaus ist es auch möglich, sowohl die oberhalb des Überlaufrings 20 geneigt und/oder schwenkbar angeordnete scheibenförmige Abdeckung 25 als auch den Rohrabschnitt 14 jeweils gegensinnig zueinander um die vertikale Drehachse 36 rotierbar zu machen.

Durch das optionale Drehen der Getreide-/ Gutrutsche wird der Überlaufring 20 rings herum zum Überlaufen gebracht und das zur Mitte hin überlaufende Getreide oder Gut noch besser zentriert.

Je nach Ausführungsvariante kann die Drehung der Getreiderutsche oder Gutrutsche wie folgt gestaltet werden. So ist eine Drehung mittels separaten Antriebs möglich. Wahlweise kann der Antrieb bspw. durch den Gutfluss oder durch den Getreidefluss oder auch motorgetrieben erfolgen, wobei die Drossel- bzw. Zentriereinrichtung 10 feststehend ausgebildet sein kann. Ebenso möglich ist eine starre Verbindung der Getreiderutsche oder Abdeckscheibe 25 mit der Drossel-, bzw. Zentriereinrichtung, so dass eine Drehbewegung um eine vertikale Längsachse 36 der Drosselanordnung 10 durch Drehung der gesamten Apparatur erfolgen kann. Möglich ist zudem eine Drehung der Getreiderutsche 25 gegenläufig zur Drehung der Drossel- bzw. Zentriereinrichtung, bspw. mit Hilfe eines Umkehrgetriebes oder mittels separaten, motorgetriebenen Antriebes.

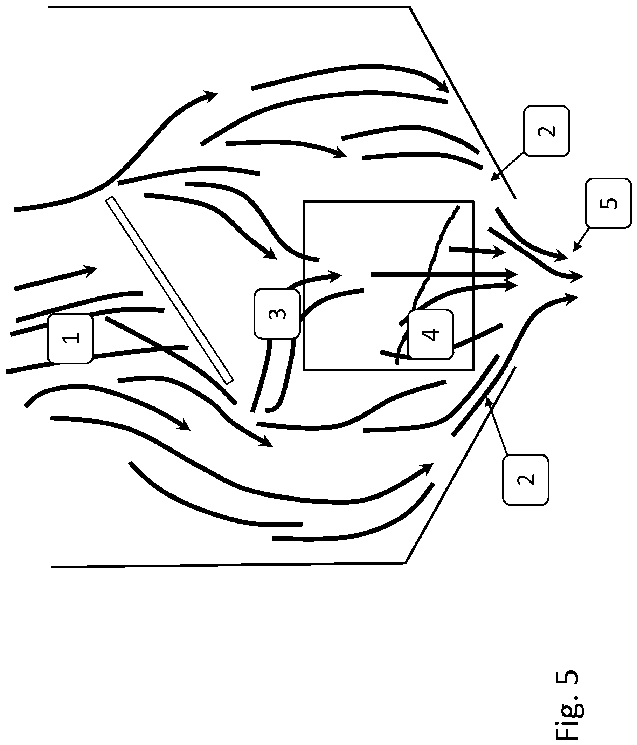

Die Funktionsweise der erfindungsgemäßen Drosselanordnung lässt sich anhand der Fig. 5 nachvollzielen. Das Getreide oder Schüttgut tritt in die Drosselanordnung ein und trifft vollflächig auf die schräg stehende Abdeckscheibe 25 und wird in den Vorratstrichter umgeleitet (1). Da der Abstand zwischen Überlaufring und Trichterauslauf nur den Mindest-Getreidefluss oder Mindest-Durchfluss an Schüttgut aufnehmen kann, staut sich das Getreide im Vorratstrichter auf und fließt gleichmäßig zwischen dem Vorratstrichter und dem Überlaufring unten aus dem Vorratstrichter aus (2). Die restliche Getreidemenge bzw. restliche Menge an Schüttgut, die sich weiter im Vorratstrichter aufstaut, läuft dann über den Überlaufring nach innen, zu Mitte hin ab (3). Die Höhe des Überlaufrings muss so gewählt sein, damit das Getreide oder Schüttgut bei dezentraler Füllung des Vorratstrichters gleichmäßig um die Öffnung zwischen Vorratstrichter und Überlaufring anfüllen kann, bevor es über den Überlaufring ablaufen kann (4). Am Vorratstrichterauslauf kommen somit die beiden Getreideströme oder Schüttgutströme zentral und in gleichmäßiger, gebremster Fließgeschwindigkeit heraus (5).

## Patentansprüche

1. Zentriereinrichtung und/oder Drosselanordnung (10) zur Regulierung des vertikalen Durchflusses von lose rieselfähigem Schüttgut, insbesondere von körnigem Gut wie Getreide, Dünger etc., mit einem ungefähr vertikal angeordneten Rohrabschnitt (14) zur Aufnahme und Durchleitung des mit der Schwerkraft nach unten rieselnden Schüttgutes, welcher Rohrabschnitt (14) sich nach unten hin trichterförmig verjüngt und in einer zentralen unteren Auslauföffnung (18) mündet, mit einem oberhalb der Auslauföffnung (18) und konzentrisch zu dieser angeordneten Überlaufring (20), der durch einen weiteren vertikal angeordneten Rohrabschnitt (22) gebildet ist, der oben und unten offen ist, und mit einer oberhalb des Überlaufrings (22) angeordneten Abdeckung (25), die den schwerkraftbedingten Strom des rieselnden Schüttgutes zumindest teilweise vom Durchlass (30) des Überlaufringes (20) ablenkt und in Richtung zu den sich trichterförmig verjüngenden Wänden des Rohrabschnittes (14) hinlenkt, **dadurch gekennzeichnet, dass** die scheibenförmig ausgebildete Abdeckung (25) beabstandet zur oberen Öffnung des Überlaufringes (20) angeordnet ist.

2. Zentriereinrichtung bzw. Drosselanordnung nach Anspruch 1, bei der ein Durchmesser der Abdeckung (25) ungefähr mit einem Durchmesser (30) des Überlaufrings (20) übereinstimmt.

3. Zentriereinrichtung bzw. Drosselanordnung nach Anspruch 1 oder 2, bei welcher der Überlaufring (20) beabstandet zur unteren Auslauföffnung (18) des Rohrabschnittes (14) angeordnet ist.

4. Zentriereinrichtung bzw. Drosselanordnung nach Anspruch 1, bei der die scheibenförmige Abdeckung (25) schräg oberhalb des Überlaufrings (20) angeordnet und/oder um eine quer zur Längserstreckungsrichtung des vertikalen Rohrabschnittes (14) angeordnete horizontale Achse verschwenkbar ist.

5. Zentriereinrichtung bzw. Drosselanordnung nach einem der Ansprüche 1 bis 4, bei der der Rohrabschnitt (14) mitsamt den innerhalb davon angeordneten weiteren Bestandteilen (20, 24, 25) um seine vertikale Längsachse (36) rotierbar ist.

6. Zentriereinrichtung bzw. Drosselanordnung nach Anspruch 4 oder Anspruch 5, bei der die oberhalb des Überlaufrings (20) geneigt und/oder schwenkbar angeordnete scheibenförmige Abdeckung (25) gegensinnig zum Rohrabschnitt (14) um eine vertikale Drehachse (36) rotierbar ist.

## Claims

1. A centring device and/or throttle arrangement (10) for regulating the vertical throughput of loose, free-flowing bulk material, in particular of granular material, such as grain, fertiliser, etc., with a tube section (14) arranged approximately vertically for receiving and conducting the bulk material that is flowing downward with the gravity, which tube section (14) tapers downward in a funnel-shaped manner and leads into a central bottom outlet opening (18), with an overflow ring (20) arranged above the outlet opening (18) and concentrically to it, which overflow ring (20) is formed by a further, vertically arranged tube section (22), which is open at the top and at the bottom, and with a cover (25) arranged above the overflow ring (22), which cover (25) guides the stream of the flowing bulk material, which stream is caused by gravity, to be at least partially deflected from the passage (30) of the overflow ring (20) toward the walls of the tube section (14), which walls taper in a funnel-shaped manner, **characterised in that** the cover (25), which is formed so as to be disc-shaped, is arranged so as to be spaced apart from the upper opening of the overflow ring (20).

2. The centring device or throttle arrangement, as the case may be, as recited in claim 1, in which a diameter of the cover (25) corresponds approximately to a diameter (30) of the overflow ring (20).

3. The centring device or throttle arrangement, as the case may be, as recited in claim 1 or 2, in which the overflow ring (20) is arranged so as to be spaced apart from the bottom outlet opening (18) of the tube section (14).

4. The centring device or throttle arrangement, as the case may be, as recited in claim 1, in which the disc-shaped cover (25) is arranged diagonally above the overflow ring (20) and/or is pivotable about a horizontal axis arranged transversely to the longitudinal extension direction of the vertical tube section (14).

5. The centring device or throttle arrangement, as the case may be, as recited in one of the claims 1 to 4, in which the tube section (14), together with further components (20, 24, 25) arranged therein, is rotatable about its vertical longitudinal axis (36).

6. The centring device or throttle arrangement, as the case may be, as recited in claim 4 or claim 5, in which the disc-shaped cover (25), which is arranged above the overflow ring (20) so as to be inclined and/or pivotable, is counter-rotatable relative to the tube section (14) about a vertical axis of rotation (36).

## Revendications

1. Dispositif de centrage et/ou ensemble d'étranglement (10) destiné à réguler l'écoulement vertical de produits en vrac pouvant ruisseler, en particulier de produits granulaires tels que céréales, engrais etc., avec un tronçon de tuyau (14) disposé à peu près verticalement qui est destiné à recevoir et à faire passer les produits en vrac ruisselant vers le bas par la gravité, lequel tronçon de tuyau (14) se rétrécit en entonnoir vers le bas et débouche dans une ouverture d'évacuation (18) centrale inférieure, avec une bague de trop-plein (20) qui est disposée au-dessus de ladite ouverture d'évacuation (18) et concentriquement par rapport à celle-ci et qui est constituée par un autre tronçon de tuyau (22) disposé verticalement qui est ouvert en haut et en bas, et avec une couverture (25) qui est disposée au-dessus de ladite bague de trop-plein (22) et qui dévie, au moins en partie, du passage (30) de la bague de trop-plein (20), le flux des produits en vrac ruisselant qui est dû à la gravité, et le dirige en direction des parois du tronçon de tuyau (14) qui se rétrécissent en entonnoir, **caractérisé par le fait que** la couverture (25) réalisée en forme de disque est disposée de manière espacée par rapport à l'ouverture supérieure de la bague de trop-plein (20).

2. Dispositif de centrage ou bien ensemble d'étranglement selon la revendication 1, dans lequel un diamètre de la couverture (25) correspond à peu près à un diamètre (30) de la bague de trop-plein (20).

3. Dispositif de centrage ou bien ensemble d'étranglement selon la revendication 1 ou 2, dans lequel ladite bague de trop-plein (20) est disposée de manière espacée par rapport à l'ouverture d'évacuation (18) inférieure du tronçon de tuyau (14).

4. Dispositif de centrage ou bien ensemble d'étranglement selon la revendication 1, dans lequel la couverture (25) en forme de disque est disposée en biais au-dessus de la bague de trop-plein (20) et/ou peut pivoter autour d'un axe horizontal disposé transversalement à la direction d'extension longitudinale du tronçon de tuyau (14) vertical.

5. Dispositif de centrage ou bien ensemble d'étranglement selon l'une quelconque des revendications 1 à 4, dans lequel le tronçon de tuyau (14) conjointement avec les autres composants (20, 24, 25) disposés à l'intérieur de celui-ci peut tourner autour de son axe longitudinal vertical (36).

6. Dispositif de centrage ou bien ensemble d'étranglement selon la revendication 4 ou la revendication 5, dans lequel la couverture (25) en forme de disque qui est disposée en biais au-dessus de la bague de trop-plein (20) et/ou à pivotement peut tourner en sens opposé au tronçon de tuyau (14) autour d'un axe de rotation (36) vertical.
